**Europäisches Patentamt**

**European Patent Office**

**Office européen des brevets**

(19)

(11) Veröffentlichungsnummer : **0 661 533 A1**

## (12) EUROPÄISCHE PATENTANMELDUNG

(21) Anmeldenummer : **94810696.8**

(22) Anmeldetag : **05.12.94**

(51) Int. Cl.$^6$ : **G01N 21/21,** G01J 4/00

(30) Priorität : **29.12.93 DE 4344855**

(43) Veröffentlichungstag der Anmeldung :
**05.07.95 Patentblatt 95/27**

(84) Benannte Vertragsstaaten :
**AT CH DE FR GB IT LI SE**

(71) Anmelder : **ABB RESEARCH LTD.**
**Affolternstrasse 52**
**CH-8050 Zürich 11 (CH)**

(72) Erfinder : **Meier, Markus, Dr.**
**Schanzmättelistrasse 37**
**CH-5000 Aarau (CH)**

(74) Vertreter : **Rzehak, Herbert et al**
**c/o ABB Management AG,**
**Abt. TEI-Immaterialgüterrecht**
**CH-5401 Baden (CH)**

(54) **Verfahren zur polarimetrischen Auswertung eines polarisationsmodulierten Lichtsignals.**

(57)   Um bei einer Auswertung von polarisationsmodulierten Lichtsignalen temperaturunabhängig zu sein, werden von Lichtleistungssignalen ($S_1$, $S_2$) Gleich- und Wechselanteile getrennt ausgewertet. Der dazu erforderliche Algorithmus ist angeben.

FIG.1

TECHNISCHES GEBIET

Bei der Erfindung wird ausgegangen von einem Verfahren zur polarimetrischen Auswertung eines polarisationsmodulierten Lichtsignals nach dem Oberbegriff des Patentanspruchs 1.

STAND DER TECHNIK

Mit dem Oberbegriff des Patentanspruchs 1 nimmt die Erfindung auf einen Stand der Technik Bezug, wie er durch Roland Stierlin, Faseroptische Sensoren, Bulletin SEV/VSE 82 (1991), S. 21 - 29, bekannt ist. Bei dem dort in Verbindung mit Bild 6 beschriebenen faseroptischen Stromsensor wir der Lichtstrahl nach Durchlaufen einer verdrillten, niedrigdoppelbrechenden Sensorlichtfaser in 2 gleiche Teile aufgespalten. Die Teilstrahlen gelangen durch je einen Polarisator auf je eine Photodiode. Die beiden Polarisatoren sind orthogonal zueinander orientiert, so daß ohne Strom gleich viel Licht durch beide Polarisatoren geht. Fließt ein Strom, so ändert sich die Lichtstärke in den beiden Teilstrahlen. Ein normiertes Modulationssignal wird aus dem Verhältnis von Differenz und Summe der beiden Photodiodensignale berechnet.

Die Verdrillung der Sensorspule führt zur Unterdrückung der biegeinduzierten linearen Doppelbrechung. Dies führt zu einer temperaturabhängigen zirkularen Doppelbrechung und damit zu einer temperaturabhängigen Lage der Polarisationsebene. Für eine übliche polarimetrische Detektion sollte jedoch die mittlere Polarisationsebene unter 45° zu den beiden orthogonalen Polarisationsfiltern und Detektoren stehen. Dies kann durch eine mechanische Nachführung der Polarisationseinheit erfolgen. In einer Hochspannungsumgebung ist diese Lösung wegen Isolationsproblemen kaum realisierbar.

Aus der US-A-3,700,334 ist ein 2Strahl-Interferometer-Polarimeter zur Messung von Intensität und Polarisationszustand eines Lichtsignals bekannt. Dort wird das Licht durch einen Strahlteiler in 2 Teilstrahlen aufgeteilt, die jeweils ein Polarisationsfilter durchlaufen. Die aus den Polaristionsfiltern austretenden Lichtstrahlen werden durch ein variables Verzögerungsglied, ein Mischglied und einen Analysator geschickt, bevor sie in einer Sensoreinheit registriert und ausgewertet werden.

DARSTELLUNG DER ERFINDUNG

Die Erfindung, wie sie im Patentanspruch 1 definiert ist, löst die Aufgabe, ein Verfahren zur polarimetrischen Auswertung eines polarisationsmodulierten Lichtsignals der eingangs genannten Art derart weiterzuentwickeln, daß eine von Temperatureinflüssen unabhängige Messung einer physikalischen oder chemischen Größe mit geringem Aufwand möglich ist.

Ein Vorteil der Erfindung besteht darin, daß keine Temperatur-Kompensationseinrichtung erforderlich ist.

Durch die Anordnung von 2 oder mehreren Polarisationsfiltern, die nicht oder nicht nur orthogonal zueinander stehen, kann man erreichen, daß man immer von einem oder von mehreren Photodetektoren ein polarimetrisches Modulationssignal erhält. Die Stärke dieses Modulationssignals hängt bei konstantem Meßsignal von der Lage der mittleren Polarisationsebene ab. Durch Auswertung des am jeweiligen Konstantanteil normierten Wechselanteils der Lichtleistungssignale aller Photodetektoren nach Betrag und Phase kann die Lage der Polarisationsrichtung bestimmt werden. Aus dieser Kenntnis kann dann das für die Auswertung jeweils günstigste Lichtleistungssignal ausgelesen und nach Betrag und Phase korrigiert werden.

Gemäß einer vorteilhaften Ausgestaltung der Erfindung kann eine Kombination von mehreren Lichtleistungssignalen ausgewertet werden. Bei Kenntnis der Lage der Polarisationsrichtung kann das Polarimetersignal exakt linearisiert werden. Damit vermeidet man Verzerrungen des Meßsignals und Intermodulationen der Harmonischen der Netzfrequenz im Falle von Messungen an einem Stromnetz.

KURZE BESCHREIBUNG DER ZEICHNUNGEN

Die Erfindung wird nachstehend anhand von Ausführungsbeispielen erläutert. Es zeigen:

Fig. 1     eine Prinzipdarstellung einer Auswerteinrichtung eines polarisationsmodulierten Lichtsignals und

Fig. 2 und 3     alternative Polarisationsrichtungen zur Auswertung analog zu Fig. 1.

WEGE ZUR AUSFÜHRUNG DER ERFINDUNG

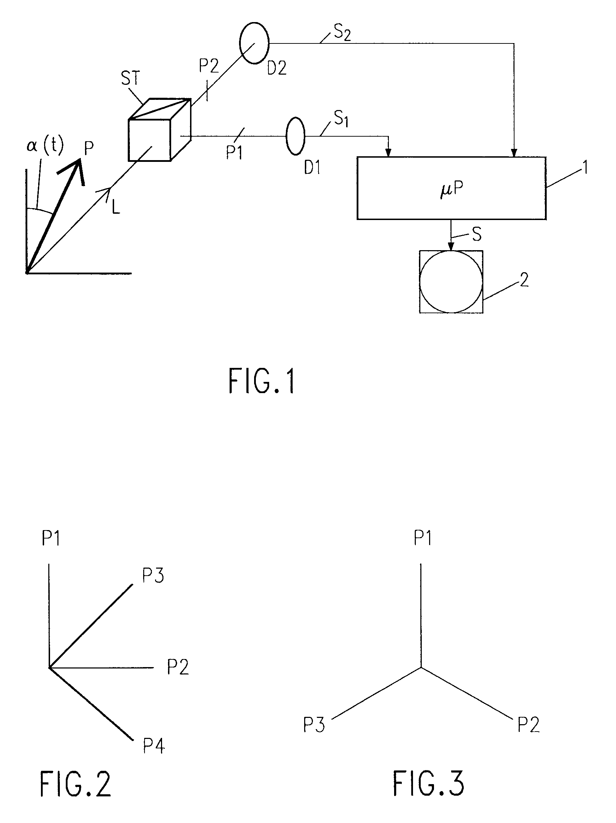

Fig. 1 zeigt einen polarisationsmodulierten Lichtstrahl (L), der z. B. aus einem magnetooptischen Faradayrotator oder aus einem faseroptischen Stromsensor (nicht dargestellt) mit einer linearen Polarisationsrichtung (P) unter einem Polarisationswinkel ($\alpha$(t)) bezüglich einer mittleren Lage der Polarisationsebene $\alpha_0$ auf

einen Strahlteiler (ST) fällt und dort in 2 Teilstrahlen getrennt wird. Die beiden Teilstrahlen gelangen durch zueinander orthogonal ausgerichtete 1. und 2. Polarisationsfilter (P1, P2) zu 1. bzw. 2. Photodetektoren bzw. Photodioden (D1, D2), welche ausgangsseitig 1. bzw. 2. Lichtleistungssignale ($S_1$, $S_2$) nach einer Umwandlung in Spannungs- und dazu proportionale digitale Signale (nicht dargestellt) an einen Mikroprozessor bzw. Rechner (1) zur Auswertung liefern. Dieser liefert ausgangsseitig ein von der Lage der Polarisationsebene $\alpha_0$ unabhängiges Modulationssignal (S) an eine Ausgabe- oder Anzeigeeinrichtung (2). Die beiden 1. Polarisationsfilter (P1, P2) wirken als Analysatoren.

Nachstehend wird die im Rechner (1) durchgeführte Auswertung der Lichtleistungssignale ($S_1$, $S_2$) beschrieben.

Bei einer allgemeinen Lage der Polarisationsebene unter dem Polarisationswinkel ($\alpha(t)$) sind die Lichtleistungssignale ($S_1$, $S_2$) durch folgende Ausdrücke gegeben:

$$S_1 = a_1 \cdot 0{,}5 \cdot (1 + \cos (2 \cdot \alpha(t))) \quad (1)$$
$$S_2 = a_2 \cdot 0{,}5 \cdot (1 + \cos (2 \cdot \alpha(t))) \quad (2)$$
$$\text{mit } \alpha(t) = \alpha_0 + \alpha_F \cdot \cos (\omega \cdot t) \quad (3)$$
$$\alpha_F = V \cdot I_0 \quad (4)$$

= Faradaywinkel, verursacht durch das Meßsignal, z. B. durch einen Strom I, $I_0$ = Maximalwert von I, V = Verdet-Konstante, $\omega$ = Winkelgeschwindigkeit der Netzfrequenz bzw. der Wechselanteile von $S_1$ und $S_2$,

$$I(t) = I_0 \cdot \cos (\omega \cdot t), \quad (5)$$

$a_1$, $a_2$ = Verstärkungsfaktoren von Übertragungskanälen im Strahlengang des 1. bzw. 2. Teilstrahls.

Daraus kann man folgende mit DC gekennzeichnete Gleichanteile und mit AC gekennzeichnete Wechselanteile aus den Lichtleistungssignalen ($S_1$, $S_2$) gewinnen:

$$S_{1,DC} = a_1 \cdot 0{,}5 \cdot (1 + \cos (2 \cdot \alpha_0)), \quad (6)$$
$$S_{2,DC} = a_2 \cdot 0{,}5 \cdot (1 - \cos (2 \cdot \alpha_0)), \quad (7)$$
$$S_{1,AC} \approx - a_1 \cdot \alpha_F \cdot \sin (2 \cdot \alpha_0) \cdot \cos (\omega \cdot t), \quad (8)$$
$$S_{2,AC} \approx a_2 \cdot \alpha_F \cdot \sin (2 \cdot \alpha_0) \cdot \cos (\omega \cdot t). \quad (9)$$

Mit den Abkürzungen:

$$A_{1,AC} = a_1 \cdot \alpha_F \cdot \sin (2 \cdot \alpha_0)$$

und

$$A_{2,AC} = a_2 \cdot \alpha_F \cdot \sin (2 \cdot \alpha_0)$$

lassen sich Quotienten Q1, Q2 und Q bilden gemäß:

$$Q1 = A_{1,AC}/S_{1,DC}$$
$$= \alpha_F \cdot \sin (2 \cdot \alpha_0)/[1 + \cos (2 \cdot \alpha_0)], \quad (10)$$

$$Q2 = A_{2,AC}/S_{2,DC}$$
$$= \alpha_F \cdot \sin (2 \cdot \alpha_0)/[1 - \cos (2 \cdot \alpha_0)], \quad (11)$$

$$Q = Q1/Q2 = 1 - \cos (2 \cdot \alpha_0)/[1 + \cos (2 \cdot \alpha_0)]. \quad (12)$$

Daraus erhält man die mittlere Lage der Polarisationsebene $\alpha_0$ gemäß:

$$\alpha_0 = 0{,}5 \cdot \arccos (1 - Q)/(1 + Q)$$
$$= \arccos (Q2 - Q1)/(Q2 + Q1). \quad (13)$$

Damit kann das von dieser Lage und von den Verstärkungsfaktoren $a_1$ und $a_2$ unabhängige Modulationssignal (S) bestimmt werden gemäß:

$$S = [S_{2,AC} - S_{1,AC}]/\sin (2 \cdot \alpha_0)/[S_{1,DC} + S_{2,DC}]$$
$$= \alpha_F \cdot \cos (\omega \cdot t). \quad (14)$$

Wegen des Faktors $1/\sin (2 \cdot \alpha_0)$ darf $\alpha_0$ nicht zu nahe an die Werte 0° und 90° herankommen.

Wenn sich der Faradaywinkel $\alpha_F$ von einem Ruhewinkel bzw. von der mittleren Lage der Polarisations-

ebene $\alpha_0$ infolge eines Einschaltvorganges plötzlich zu verändern beginnt, dann kann die Auswertung mit der Methode der AC/DC-Quotienten nicht mehr durchgeführt werden. Anstelle der AC-Werte treten dann die momentanen 1. Ableitungen der Lichtleistungssignale ($S_1$, $S_2$). Damit treten wieder die gleichen Ausdrücke wie in der Taylorentwicklung der Gleichungen (8) und (9) auf. Der Winkel $\alpha(t)$ kann wieder aus einer Quotienten- und arccos-Operation gewonnen werden. Das Modulationssignal (S) wird dann als Differenz zum 1. auftretenden $\alpha$-Wert gebildet.

Wenn der Winkel $\alpha_0$ von 45° abweicht, dann enthalten die Taylorentwicklungen der Gleichungen (8) und (9) um den Punkt $\alpha_0$ auch noch Glieder mit geraden Potenzen (2., 4., ...) des Modulationssignals (S). Diese geraden Potenzen führen aber durch deren "Gleichrichterwirkung" zu Beiträgen des DC-Anteils, die nicht direkt aus den Termen:

$$S_{1,DC} = a_1 \cdot 0{,}5 \cdot (1 + \cos (2 \cdot \alpha_0))$$

und

$$S_{2,DC} = a_2 \cdot 0{,}5 \cdot (1 - \cos (2 \cdot \alpha_0))$$

stammen. Dadurch wird die Berechnung des Winkels $\alpha_0$ verfälscht, wenn sie nach der Gleichung (13) durchgeführt wird.

Eine Erweiterung des Winkelbereiches von $\alpha_0$ kann durch Hinzunahme von weiteren Polarisationskanälen erreicht werden. Zu den Polarisationsrichtungen (P1, P2) gemäß Fig. 1 kann noch das orthogonale, aber um 45° gedrehte Paar (P3, P4) hinzugenommen werden, vgl. Fig. 2. Dazu leitet man die beiden Teilstrahlen vom Ausgang des Strahlteilers (ST) über je einen weiteren, nicht dargestellten Strahlteiler. Damit erreicht man, daß die Polarisationsrichtung (P) immer innerhalb $\pm 22{,}5°$ zur Winkelhalbierenden eines Polarisationssystems liegt. Durch eine Auswertung der Lichtleistungssignale beider Detektorpaare kann durch eine Logik jeweils das günstigste Signalpaar ausgewertet werden, d. h. dasjenige Signalpaar, für welches die o. g. Bedingung ($\pm 22{,}5°$) erfüllt ist.

Eine weitere Möglichkeit ist die Anordnung der Polarisationsfilter (P1, P2, P3) unter einem gegenseitigen Winkel von 120°, vgl. Fig. 3. Dazu leitet man einen der beiden Teilstrahlen vom Ausgang des Strahlteilers (ST) über einen weiteren, nicht dargestellten Strahlteiler. Hier muß das jeweils günstigste Signalpaar (P1, P2; P2, P3; P3, P4) bestimmt und zur Auswertung herangezogen werden, d. h. dasjenige Signalpaar, für welches die Polarisationsrichtung (P) innerhalb von $\pm 30°$ zur Winkelhalbierenden des Polarisationspaares liegt.

## BEZEICHNUNGSLISTE

| | |
|---|---|
| 1 | Rechner, Mikroprozessor |
| 2 | Ausgabeeinrichtung, Anzeigeeinrichtung |
| D1, D2 | Photodetektoren, Photodioden |
| L | Lichtstrahl |
| P | Polarisationsrichtung |
| P1 - P4 | Polarisationsfilter, Polarisationsrichtungen |
| S | Modulationssignal |
| $S_1$, $S_2$ | Lichtleistungssignale |
| ST | Strahlteiler |
| t | Zeit |
| $\alpha$ | Polarisationswinkel |

## Patentansprüche

1. Verfahren zur polarimetrischen Auswertung eines polarisationsmodulierten Lichtsignals,

a) wobei Licht (L) mit einer Polarisationsrichtung (P) bezüglich einer Polarisationsebene $\alpha_0$ in einem Strahlteiler (ST) in 2 Teilstrahlen geteilt und

b) danach jeder Teilstrahl über ein Polarisationsfilter (P1, P2) auf einen Photodetektor (D1, D2) gelenkt wird,

c) welche Photodetektoren (D1, D2) ausgangsseitig zur empfangenen Lichtleistung proportionale Lichtleistungssignale ($S_1$, $S_2$) liefern,

d) wobei von jedem dieser Lichtleistungssignale ($S_1$, $S_2$) ein Gleichanteil $S_{1,DC}$, $S_{2,DC}$ und ein Wechselanteil $S_{1,AC}$, $S_{2,AC}$ abgeleitet und

e) die jeweiligen Gleich- und Wechselanteile ($S_{1,DC}$, $S_{1,AC}$; $S_{2,DC}$, $S_{2,AC}$) zueinander ins Verhältnis gesetzt werden,

dadurch gekennzeichnet,

f) daß ein Modulationssignal S gemäß:

$$S = [S_{2,AC} - S_{1,AC}]/\sin (2 \cdot \alpha_0)/[S_{1,DC} + S_{2,DC}]$$

gebildet und ausgegeben wird, mit

$$S_{1,AC} \approx - a_1 \cdot \alpha_F \cdot \sin (2 \cdot \alpha_0) \cdot \cos (\omega \cdot t),$$
$$S_{2,AC} \approx a_2 \cdot \alpha_F \cdot \sin (2 \cdot \alpha_0) \cdot \cos (\omega \cdot t),$$
$$S_{1,DC} = a_1 \cdot 0{,}5 \cdot (1 + \cos (2 \cdot \alpha_0)),$$
$$S_{2,DC} = a_2 \cdot 0{,}5 \cdot (1 - \cos (2 \cdot \alpha_0)),$$

$\alpha_F$ = durch eine physikalische oder chemische Größe erzeugter Drehwinkel, $\alpha_0$ = Winkel, der die Polarisationsebene definiert, $\omega$ = Winkelgeschwindigkeit von $S_{1,AC}$ und $S_{2,AC}$, $a_1$, $a_2$ = Verstärkungsfaktoren von Lichtübertragungskanälen.

2. Verfahren nach Anspruch 1, dadurch gekennzeichnet,
a) daß das auszuwertende polarisationsmodulierte Licht (L) in 4 Teilstrahlen aufgeteilt wird,
b) daß je 2 dieser Teilstrahlen orthogonal zueinander polarisiert werden, derart, daß 2 orthogonale Paare von Teilstrahlen entstehen,
c) daß die Polarisationsrichtungen (P1, P2; P3, P4) der beiden orthogonalen Paare von Teilstrahlen um 45° relativ zueinander gedreht sind,
d) daß die von den Teilstrahlen abgeleiteten Lichtleistungssignale ($S_1$, $S_2$) je Signalpaar separat ausgewertet werden und
e) daß dasjenige Signalpaar für die Berechnung des Modulationssignals (S) ausgewählt wird, für welches die Polarisationsrichtung (P) des Lichtes (L) innerhalb von ± 22,5° zur Winkelhalbierenden des Signalpaares liegt.

3. Verfahren nach Anspruch 1, dadurch gekennzeichnet,
a) daß Lichtleistungssignale von 3 Polarisationsrichtungen (P1 - P3), die um je 120° relativ zueinander gedreht sind, separat ausgewertet werden und
b) daß dasjenige Signalpaar (P1, P2; P2, P3; P3, P4) für die Berechnung des Modulationssignals (S) ausgewählt wird, für welches die Polarisationsrichtung (P) des Lichtes (L) innerhalb von ± 30° zur Winkelhalbierenden des Signalpaares liegt.

FIG.1

FIG.2

FIG.3

Europäisches
Patentamt

**EUROPÄISCHER RECHERCHENBERICHT**

Nummer der Anmeldung

EP 94 81 0696

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | FR-A-2 690 529 (BRITISH AEROSPACE) * Ansprüche; Abbildungen 1,2 * --- | 1 | G01N21/21 G01J4/00 |
| D,A | US-A-3 700 334 (LOW ET AL.) * Seite 4, Zeile 18 - Seite 5, Zeile 5; Abbildung 1 * --- | 1 | |
| D,A | BULLETIN SEV/VSE, Bd. 82, 9.Januar 1991 ZÜRICH, Seiten 21-29, STIERLIN 'FASEROPTISCHE SENSOREN' * Seite 26, rechte Spalte, Absatz 2 - Seite 28, linke Spalte, Absatz 1; Abbildung 6 * ----- | 1 | |

|  |
|---|
| **RECHERCHIERTE SACHGEBIETE (Int.Cl.6)** |
| G01N G01J |

Der vorliegende Recherchenbericht wurde für alle Patentansprüche erstellt

| Recherchenort | Abschlußdatum der Recherche | Prüfer |
|---|---|---|
| DEN HAAG | 6.April 1995 | Krametz, E |

EPO FORM 1503 03.82 (P04C03)